# EUROPÄISCHE PATENTSCHRIFT

(11) **EP 2 192 403 B1**
(45) Veröffentlichungstag und Bekanntmachung des Hinweises auf die Patenterteilung: **22.02.2017**
(21) Anmeldenummer: 09170543.4
(22) Anmeldetag: 17.09.2009
(51) Int. Cl.: G01N 27/407

(54) **Messfühler**
Sensor
Sonde de mesure

(30) Priorität: 28.11.2008 DE 102008044159
(43) Veröffentlichungstag der Anmeldung: 02.06.2010
(73) Patentinhaber: Robert Bosch GmbH, 70442 Stuttgart (DE)
(72) Erfinder: Harzer, Olav, 70374 Stuttgart (DE); Maier, Rainer, 71732 Tamm (DE); Jaehnig, Gregor, 75417 Muehlacker (DE); Buchholz, Bastian, 70184 Stuttgart (DE); Wild, Bernhard, 71706 Markgroeningen (DE); Rattay, Bernd, 71254 Ditzingen (DE); Dettling, Peter, 71336 Waiblingen (DE); Karle, Juergen, 71277 Rutesheim (DE); Moratz, Juergen, 73765 Neuhausen A.D.F. (DE); Sert, Hasan, 74372 Sersheim (DE); Stier, Joachim, 75378 Bad Liebenzell (DE); Russ, Sebastian, 71277 Rutesheim (DE); Robison, John, 70469 Stuttgart (DE)

(56) Entgegenhaltungen:
- DE-A1- 19 631 501
- DE-U1- 9 410 070
- JP-A- 2006 145 397
- US-A- 4 415 878
- US-A1- 2007 101 801
- US-B2- 7 434 448

## Beschreibung

### Stand der Technik

Die Erfindung geht aus von einem Messfühler nach der Gattung des Hauptanspruchs.

Es ist schon ein Messfühler aus der DE 196 31 501 A1 bekannt, mit einem Gehäuse, das eine Gehäuseöffnung aufweist, durch die Anschlusskabel herausgeführt sind, mit einem in der Gehäuseöffnung angeordneten Dichtkörper, der von den Anschlusskabeln durchragt wird, und mit zwei den Dichtkörper radial verpressenden Verstemmungen des Gehäuses, deren Kontur eine maximale radiale Erstreckung hat, von der aus sie sich in beide axiale Richtungen verjüngt.

Die beiden Verstemmungen sind zylinderförmig und an den Enden des Dichtkörpers ausgeführt, wobei sich zwischen den beiden zylinderförmigen Verstemmungen der maximale Durchmesser mit den beiden Verjüngungen einstellt.

Nachteilig ist, dass der Dichtkörper aus Teflon (PTFE) hergestellt ist und aufgrund der Materialeigenschaften des Teflon keine optimale Dichtwirkung bei Temperaturen von 280 Grad erzielbar ist. Auf der dem Gehäuse zugewandten Seite ist ein Dichtring erforderlich, um den Dichtkörper hinreichend abzudichten. Zur Kabelisolation hin wird keine absolut dichte Verbindung bei 280 Grad Celsius erreicht.

Weitere Messfühler sind aus der US 4 415 878, der US 7 434 448 B2, der US 2007/101801 A1. der JP 2006 145397 A und der DE 94 10070 U1 bekannt.

### Vorteile der Erfindung

Der erfindungsgemäße Messfühler mit den kennzeichnenden Merkmalen des Hauptanspruchs hat demgegenüber den Vorteil, dass eine verbesserte Dichtwirkung ohne einen Dichtring erzielt wird und der Messfühler auf diese Weise vereinfacht und dessen Herstellungskosten verringert werden, indem die beiden Verjüngungsabschnitte der Verstemmung in axialer Richtung zumindest bis oder zumindest bis nahe an die Enden des Dichtkörpers heranreichen.

Durch die in den Unteransprüchen aufgeführten Maßnahmen sind vorteilhafte Weiterbildungen und Verbesserungen des im Hauptanspruch angegebenen Messfühlers möglich.

Besonders vorteilhaft ist, wenn die Verjüngungsabschnitte in einem Bereich zwischen 2 Grad und 30 Grad zur axialen Richtung geneigt sind. Es hat sich gezeigt, dass auf diese Weise eine besonders gute Dichtwirkung erzielt wird.

Darüber hinaus vorteilhaft ist, wenn der Dichtkörper einen Durchmesser und eine Höhe aufweist, wobei das Verhältnis des Durchmessers zur Höhe kleiner als 1,2 ist. Auf diese Weise wird eine besonders gute Dichtwirkung erzielt.

### Zeichnung

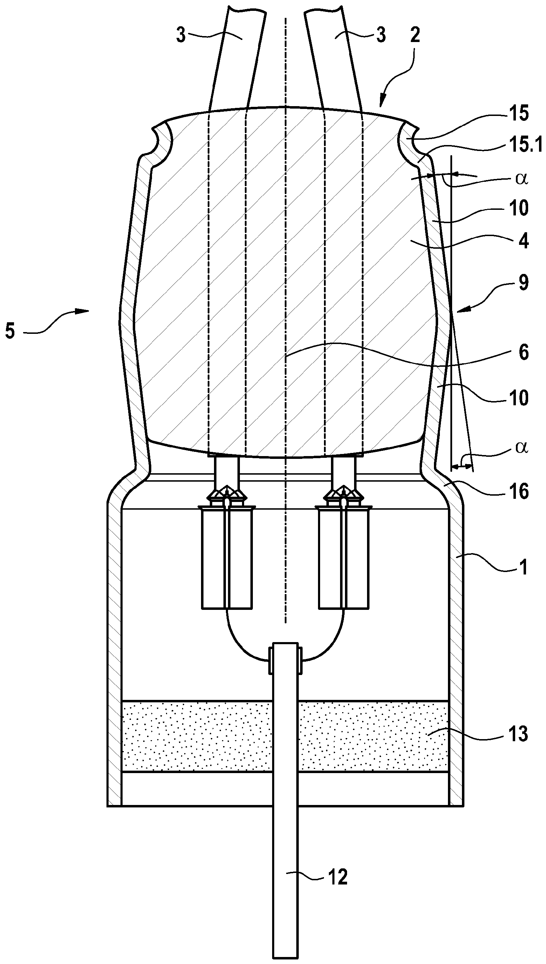

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt im Schnitt einen vereinfacht dargestellten Messfühler.

Der Messfühler ist beispielsweise ein Abgassensor, der der Bestimmung der Sauerstoffkonzentration in einem Abgas einer Brennkraftmaschine dient. Der Messfühler kann aber ausdrücklich auch zur Bestimmung anderer physikalischer Größen verwendet werden. Die Erfindung kann aber ausdrücklich auch in anderen Einrichtungen zur Abdichtung einer Kabeldurchführung verwendet werden.

Der Messfühler hat ein Gehäuse 1 mit einer Gehäuseöffnung 2, durch die zumindest ein elektrisches Anschlusskabel 3 aus dem Gehäuse 1 herausgeführt ist. In der Gehäuseöffnung 2 ist ein Dichtkörper 4 angeordnet, der von dem zumindest einen Anschlusskabel 3 durchragt wird. Das Gehäuse 1 ist in einem Bereich 5 des Dichtkörpers 4 zylinderförmig oder hülsenförmig ausgeführt. Der Dichtkörper 4 ist in der Gehäuseöffnung 2 mittels einer Verstemmung bzw. Verformung des Gehäuseabschnitts 5 fixiert. Der Gehäuseabschnitt 5 hat nach der Verstemmung eine Kontur mit einer maximalen radialen Erstreckung 9 bezüglich einer Längsachse 6 des Messfühlers. Von dieser maximalen Erstreckung 9 ausgehend verjüngt sich der Gehäuseabschnitt 5 in beide axiale Richtungen.

Im Stand der Technik wird der Gehäuseabschnitt 5 an seinen Enden mittels zweier zylinderförmiger Verstemmwerkzeuge verstemmt.

Erfindungsgemäß ist dagegen ein einziges Verstemmwerkzeug vorgesehen, das eine Verstemmung erzeugt, die zumindest nahezu über die gesamte Länge des Dichtkörpers 4, zumindest 90 Prozent der Länge des Dichtkörpers 4, verläuft. Dabei reichen die beiden Verjüngungsabschnitte 10 des Gehäuseabschnitts 5 in axialer Richtung zumindest bis oder bis nahe an die Enden des Dichtkörpers 4 heran.

Durch die beschriebene Kontur des verstemmten Gehäuseabschnitts 5 wird die axiale Längenausdehnung des Dichtkörpers 4 und die damit verbundene Abnahme der Dichtwirkung begrenzt.

Die Verjüngungsabschnitte 10 des Gehäuseabschnitts 5 sind erfindungsgemäß geradlinig geneigt und schließen insbesondere einen Winkel α im Bereich zwischen 2 Grad und 30 Grad zur axialen Richtung ein. Die weiteste Stelle 9 des Gehäuseabschnitts 5 ist erfindungsgemäß linienförmig. oder

Der Dichtkörper 4 ist aus einem Fluorelastomer, also aus Fluor und Kautschuk, beispielsweise aus Viton, hergestellt.
Der Dichtkörper 4 weist vor dem Verstemmen, also im unverformten Zustand, einen Durchmesser D und eine Höhe H auf, wobei das Verhältnis des Durchmessers D zur Höhe H kleiner als 1,2 ist. Auf diese Weise wird eine optimale Dichtfunktion erreicht, die bis zu Temperaturen von 280 Grad aufrechterhalten bleibt. Die Dichtwirkung wird sowohl zum Gehäuse 1 hin als auch an den Kabeldurchführungen erzielt.

Der Gehäuseabschnitt 5 hat an seinen Enden zwei stufenförmige Absätze 15,16, wobei der erste Absatz 15 am Ende des Gehäuses 1 angeordnet ist und der axialen Fixierung des Dichtkörpers 4 dient und der zweite Absatz 16 sich zum übrigen Gehäuse 1 hin erweitert. Der erste Absatz 15 wird durch die Verstemmung gemäß der Zeichnung verformt, wobei der Dichtkörper 4 über eine Schulter 15.1 des ersten Absatzes 15 hinaus gedrückt wird.

Die Anschlusskabel 3 kontaktieren im Falle eines Abgassensors beispielsweise ein Sensorelement 12, das mittels einer Dichtpackung 13 in dem Gehäuse 1 gehalten und abgedichtet ist. Das Sensorelement 12 dient der Bestimmung der physikalischen Größe des Abgases, beispielsweise der Sauerstoffkonzentration.

## Patentansprüche

1. Messfühler mit einem Gehäuse, das eine Gehäuseöffnung aufweist, durch die zumindest ein Anschlusskabel aus dem Gehäuse herausgeführt ist, mit einem in der Gehäuseöffnung angeordneten Dichtkörper, der von dem zumindest einen Anschlusskabel durchragt wird, und mit einer den Dichtkörper radial verpressenden Verstemmung des Gehäuses, deren Kontur eine maximale radiale Erstreckung hat, von der aus sie sich in beide axiale Richtungen verjüngt,
wobei die beiden Verjüngungsabschnitte (10) der Verstemmung in axialer Richtung zumindest
bis oder bis nahe an die Enden des Dichtkörpers (4) hernreichen, sodass eine Verstemmung zumindest entlang 90 Prozent der Länge des Dichtkörpers (4) erzeugt wird,
**dadurch gekennzeichnet, dass** die weiteste Stelle (9) der Verstemmung (5) linienförmig, ausgerührt ist und dass die Verjünugnsabschnitte (10) geradlinig verlaufen.

2. Messfühler nach Anspruch 1, **dadurch gekennzeichnet, dass** die Verjüngungsabschnitte (10) in einem Bereich zwischen 2 Grad und 30 Grad zur axialen Richtung (6) geneigt sind.

3. Messfühler nach Anspruch 1, **dadurch gekennzeichnet, dass** der Dichtkörper (4) einen Durchmesser (D) und eine Höhe (H) aufweist, wobei das Verhältnis des Durchmessers (D) zur Höhe (H) kleiner als 1,2 ist.

4. Messfühler nach Anspruch 1, **dadurch gekennzeichnet, dass** der Dichtkörper (4) aus einem Fluorelastomer hergestellt ist.

## Claims

1. Sensor having a housing which has a housing opening through which at least one connecting cable is led out of the housing, having a sealing element arranged in the housing opening, through which the at least one connecting cable projects, and having a deformed portion of the housing which presses radially on the sealing element and the contour of which has a maximum radial extent from which it tapers in both axial directions, the two tapering sections (10) of the deformed portion reaching in the axial direction at least as far as or as far as the vicinity of the ends of the sealing element (4), so that a deformed portion is produced at least along 90% of the length of the sealing element (4), **characterized in that** the widest point (9) of the deformed portion (5) is of linear design and that the tapering sections (10) run rectilinearly.

2. Sensor according to Claim 1, **characterized in that**
the tapering sections (10) are inclined in a range between 2 degrees and 30 degrees with respect to the axial direction (6).

3. Sensor according to Claim 1, **characterized in that**
the sealing element (4) has a diameter (D) and a height (H), wherein the ratio of the diameter (D) to the height (H) is less than 1.2.

4. Sensor according to Claim 1, **characterized in that** the sealing element (4) is produced from a fluoroelastomer.

## Revendications

1. Sonde de mesure comprenant un boîtier, qui présente une ouverture de boîtier à travers laquelle au moins un câble de raccordement est guidé hors du boîtier, comprenant un corps d'étanchéité disposé dans l'ouverture de boîtier à travers lequel passe l'au moins un câble de raccordement, et comprenant un matage du boîtier pressant radialement le corps d'étanchéité, dont le contour présente une étendue radiale maximale depuis laquelle il se rétrécit dans les deux directions axiales, les deux portions rétrécies (10) du matage s'étendant dans la direction axiale au moins jusqu'aux extrémités du corps d'étanchéité (4) ou à proximité de celles-ci de telle sorte qu'un matage soit généré sur au moins 90 % de la longueur du corps d'étanchéité (4), **caractérisée en ce que** l'emplacement le plus large (9) du matage (5) est réalisé sous forme linéaire et **en ce que** les portions rétrécies (10) s'étendent en ligne droite.

2. Sonde de mesure selon la revendication 1,
**caractérisée en ce que** les portions rétrécies (10) sont inclinées dans une plage comprise entre 2° et 30° par rapport à la direction axiale (6).

3. Sonde de mesure selon la revendication 1,
**caractérisée en ce que** le corps d'étanchéité (4) présente un diamètre (D) et une hauteur (H), le rapport du diamètre (D) à la hauteur (H) étant inférieur à 1,2.

4. Sonde de mesure selon la revendication 1,
**caractérisée en ce que** le corps d'étanchéité (4) est fabriqué à partir d'un élastomère fluoré.
